# EUROPÄISCHE PATENTSCHRIFT

(11) **EP 2 631 031 B1**
(45) Veröffentlichungstag und Bekanntmachung des Hinweises auf die Patenterteilung: **24.08.2022**
(21) Anmeldenummer: 13151132.1
(22) Anmeldetag: 14.01.2013
(51) Int. Cl.: B23P 19/00, B23P 19/06, B21J 15/32

(54) **ÜBERGABEVORRICHTUNG FÜR DIE SCHIEBENDE ÜBERGABE VON EINPRESSELEMENTEN AN EINEM BLECHBEARBEITUNGSWERKZEUG UND BLECHBEARBEITUNGSWERKZEUG MIT EINER SOLCHEN ÜBERGABEVORRICHTUNG**
TRANSFER DEVICE FOR PUSHING PRESS IN ELEMENTS TO A SHEET PROCESSING TOOL AND SHEET PROCESSING TOOL WITH SUCH A TRANSFER DEVICE
DISPOSITIF DE TRANSFERT POUR LE TRANSFERT EN PROPULSION D'ÉLÉMENTS DE COMPRESSION SUR UN OUTIL DE TRAITEMENT DE TÔLE ET OUTIL DE TRAITEMENT DE TÔLE DOTÉ D'UN TEL DISPOSITIF DE TRANSFERT

(30) Priorität: 21.02.2012 DE 102012202597
(43) Veröffentlichungstag der Anmeldung: 28.08.2013
(73) Patentinhaber: Bayerische Motoren Werke Aktiengesellschaft, 80809 München (DE)
(72) Erfinder: Hamberger, Stephan, 84326 Rimbach (DE); Höhenberger, Franz-Xaver, 84152 Obertunding (DE); Meller, Erhard, 84152 Mengkofen (DE)

(56) Entgegenhaltungen:
- WO-A1-99/61197
- DE-A1- 4 422 708

## Beschreibung

Die Erfindung betrifft eine Übergabevorrichtung zur Übergabe von Einpresselementen bzw. Befestigungselementen in oder an einem pressengebundenen Blechbearbeitungswerkzeug oder dergleichen gemäß der im Oberbegriff des Anspruchs 1 näher angegebenen Art. Eine solche Übergabevorrichtung ist aus WO 99/61197 A oder DE 44 22 708 A bekannt.

Die Erfindung betrifft ferner ein pressengebundenes Blechbearbeitungswerkzeug mit wenigstens einer solchen Übergabevorrichtung.

Es ist bekannt, dass Befestigungselemente durch Einpressen bzw. Verpressen an einem Blechmaterial befestigt werden können. Derartige Befestigungselemente sind mit einem Fügeabschnitt, der in das Blechmaterial eingepresst bzw. mit dem Blechmaterial verpresst wird, ausgebildet. Nachfolgend werden derartige Befestigungselemente als Einpresselemente bezeichnet. Das Einpressen solcher Einpresselemente kann in einem pressengebundenen Blechbearbeitungswerkzeug erfolgen, wozu dieses wenigstens einen so genannten Einpressstößel (bzw. Stanzkopf oder Setzkopf) aufweist, der bei gängigen Blechbearbeitungswerkzeugen abhängig von der Einpressrichtung im Werkzeugoberteil oder im Werkzeugunterteil angeordnet ist. Aus dem Stand der Technik sind Zuführeinrichtungen bekannt, mit denen die einzupressenden Einpresselemente dem Einpressstößel oder gegebenenfalls auch mehreren Einpressstößel in einem Blechbearbeitungswerkzeug zugeführt werden können. Eine solche Zuführeinrichtung ist in der DE 197 09 714 A1 beschrieben.

Aus dem Stand der Technik sind ferner Übergabevorrichtungen bekannt, mit denen die durch eine Zuführeinrichtung einem Blechbearbeitungswerkzeug zugeführten Einpresselemente pressentaktgebunden vom Werkzeugunterteil an das Werkzeugoberteil des Blechbearbeitungswerkzeugs übergeben werden können. Hiermit kann eine oftmals problematische direkte Zuführung zum Werkzeugoberteil vermieden werden.

Derartige Übergabevorrichtungen sind aus der DE 198 23 040 A1 bekannt, wobei insbesondere die im Zusammenhang mit den Fig. 5 und 6 beschriebene Übergabevorrichtung im Hinblick auf die Erfindung von Interesse ist. Diese Übergabevorrichtung umfasst eine obere Kupplungseinrichtung, die am Werkzeugoberteil befestigt ist, und eine untere Kupplungseinrichtung, die am Werkzeugunterteil befestigt ist. Die zu übergebenden Einpresselemente werden von einer Zuführeinrichtung der unteren Kupplungseinrichtung zugeführt und dort in einem Übergabekanal für die Übergabe bereitgestellt. In der oberen Kupplungseinrichtung befindet sich eine mechanische Vorschubeinheit die beim Eingriff zwischen der oberen und der unteren Kupplungseinrichtung während der Abwärtsbewegung des Werkzeugoberteils gespannt wird. Im unteren Totpunkt wird dann der bis dahin durch eine federbelastete Sperre verschlossene Übergabekanal in der unteren Kupplungseinrichtung automatisch geöffnet. Zeitgleich wird die Vorschubeinheit entspannt, die hierauf hin eine definierte Anzahl von Einpresselementen aus dem Übergabekanal in einen in Überdeckung gebrachten Übernahmekanal in der oberen Kupplungseinrichtung einschiebt. Die weitere Förderung der übergebenen Einpresselemente im Werkzeugoberteil wird durch die Vorschubeinheit bewerkstelligt.

Derartige Übergabevorrichtungen sind auch aus der DE 44 22 708 A1 bekannt, wobei hier insbesondere die im Zusammenhang mit den Fig. 5 bis 11 beschriebene Übergabevorrichtung im Hinblick auf die Erfindung von Interesse ist. Diese Übergabevorrichtung ist weitgehend ähnlich zu der aus der DE 44 22 708 A1 bekannten Übergabevorrichtung, wobei jedoch bei jedem Pressenhub nur ein Einpresselement übergeben wird. Das Übergeben eines Einpresselements von der unteren Kupplungseinrichtung an die obere Kupplungseinrichtung erfolgt durch einen von der Zuführeinrichtung erzeugten Staudruck bzw. Förderdruck, nachdem der Übergabekanal an der unteren Kupplungseinrichtung und der Übernahmekanal an der oberen Kupplungseinrichtung in Überdeckung gebracht wurden und nachdem eine federbelastete Sperre am Übergabekanal automatisch geöffnet wurde. Durch einen an der unteren Kupplungseinrichtung ausgebildeten Anschlag wird eine genaue und reproduzierbare Positionierung des zu übergebenden Einpresselements sichergestellt. Die weitere Förderung des übergebenen Einpresselements im Werkzeugoberteil wird durch eine federkraftbeaufschlagte Vorschubschwinge bewerkstelligt.

Der Erfindung liegt die Aufgabe zugrunde, eine Übergabevorrichtung der eingangs genannten Art anzugeben, die unanfällig gegen Störung ist und die eine fehlerfreie Übergabe von Einpresselementen ermöglicht.

Diese Aufgabe wird gelöst durch eine erfindungsgemäße Übergabevorrichtung mit den Merkmalen des Anspruchs 1. Vorteilhafte und bevorzugte Weiterbildungen und Ausgestaltungen ergeben sich aus den abhängigen Ansprüchen.

Die erfindungsgemäße Übergabevorrichtung für die schiebende Übergabe von Einpresselementen an einem pressengebundenen Blechbearbeitungswerkzeug (oder dergleichen) weist eine untere Kupplungseinrichtung bzw. untere Kupplungseinheit auf, die an einem Werkzeugunterteil gehalten bzw. daran zu befestigen ist, und eine obere Kupplungseinrichtung bzw. obere Kupplungseinheit, die an einem Werkzeugoberteil gehalten bzw. daran zu befestigen ist und die beim pressentaktgebundenen Schließen des Blechbearbeitungswerkzeugs mit der unteren Kupplungseinrichtung derart in Kontakt bzw. in Eingriff gebracht wird, dass ein in der oberen Kupplungseinrichtung vorhandener Übernahmekanal mit einem in der unteren Kupplungseinrichtung vorhandenen Übergabekanal in Überdeckung gelangt, wodurch die (schiebende) Übergabe wenigstens eines Einpresselements ermöglicht wird. Es ist vorgesehen, dass die untere Kupplungseinrichtung eine erste betätigbare Durchlasssperre für den Übergabekanal aufweist und dass die obere Kupplungseinrichtung eine zweite betätigbare Durchlasssperre für den Übernahmekanal aufweist, wobei diese Durchlasssperren während des Kontakts bzw. während des Ineinandergreifens der Kupplungseinrichtungen automatisch wechselweise betätigt werden, um hierdurch die schleusenartige Übergabe einer definierten Anzahl von Einpresselementen, und insbesondere exakt eines Einpresselements, zu ermöglichen. Die Übergabe erfolgt insbesondere in horizontaler Richtung.

Unter einer betätigbaren Durchlasssperre wird eine mechanische wirksame Sperreinrichtung verstanden, mit der der Durchlass (bzw. Durchgang) durch den Übergabekanal bzw. durch den Übernahmekanal für die zu übergebenden Einpresselemente wahlweise gesperrt oder freigegeben werden kann.

Bei den zu übergebenden Einpresselementen handelt es sich insbesondere um Einpressmuttern (im Folgenden nur als Muttern bezeichnet). Eine solche Mutter ist ein Befestigungselement der eingangs erläuterten Art, wobei dieses Befestigungselement wenigstens einen Innengewindeabschnitt aufweist. Ferner ist eine solche Mutter insbesondere durch eine axiale Längserstreckung gekennzeichnet, wobei die axiale Länge (bzw. Höhe) geringer und insbesondere deutlich geringer ist als der Durchmesser (bzw. die Breite) quer zur Längsachse. Bei den Einpresselementen kann es sich jedoch auch um bolzenartige Befestigungselemente mit wenigstens einem Außengewindeabschnitt handeln.

Die Zuführung der zu übergebenden Einpresselemente zur erfindungsgemäßen Übergabevorrichtung und die Wegführung (bzw. Abführung) der übergebenen Einpresselemente von der Übergabevorrichtung erfolgt in einer so genannten schiebenden Förderung, wobei die Einpresselemente permanent auf Stoß aneinander anliegen und sich in einer Reihe taktweise im Rhythmus der Übergabe bewegen, wobei insbesondere vorgesehen ist, dass zumindest die in der Zuführung befindlichen Einpresselemente seitens der Zuführeinrichtung permanent unter Förderdruck stehen. Auch die Übergabe erfolgt durch schiebende Förderung. Die Förderung und Übergabe erfolgt insbesondere seitlich, d. h. quer zur axialen Längserstreckung der Einpresselemente. Ein anderes Förderprinzip ist die so genannte "schießende Förderung" (bzw. die Schusstechnik), die sich grundlegend von der hier betreffenden schiebenden Förderung unterscheidet.

Durch die beiden betätigbaren Durchlasssperren an der erfindungsgemäßen Übergabevorrichtung wird eine Schleuse geschaffen (wie nachfolgend noch näher erläutert), die eine besonders prozesssichere, sehr zuverlässige, extrem sichere und in hohem Maße fehlerfreie Übergabe von Einpresselementen ermöglicht, vor allem auch bei hohen Pressenhubgeschwindigkeiten und/oder hohen Pressenhubzahlen. Insbesondere bei permanent unter Förderdruck stehenden Einpresselementen kann durch das Schleusenprinzip zuverlässig die Übergabe einer exakten Anzahl von Einpresselementen pro Pressentakt oder pro Schließzyklus (Zeitspanne des Eingriffs der Kupplungseinrichtungen) ermöglicht werden. Besonders bevorzugt ist vorgesehen, dass die erfindungsgemäße Übergabevorrichtung im Wesentlichen nur mechanisch aufgebaut ist und somit robust und unanfällig gegen Störungen ist. Elektrische oder elektronische Überwachungseinrichtungen oder dergleichen sind nicht erforderlich.

Es ist vorgesehen, dass die erste Durchlasssperre an der unteren Kupplungseinrichtung als erster Sperrschieber (bzw. erste Sperrklinke) ausgebildet ist.

Es ist ferner vorgesehen, dass die zweite Durchlasssperre an der oberen Kupplungseinrichtung als zweiter Sperrschieber (bzw. zweite Sperrklinke) ausgebildet ist. Es ist vorgesehen, dass diese Sperrschieber quer zur Förderrichtung der zu übergebenden Einpresselemente bewegt werden können, um den Übergabekanal bzw. den Übernahmekanal in einer Sperrposition zu versperren oder in einer Freigabeposition frei zu geben.

Die erfindungsgemäße Ubergabevorrichtung verfügt über einen ersten Sperrschiebermechanismus, der den ersten Sperrschieber beim In-Kontakt-Bringen bzw. beim Ineinandergreifen der Kupplungseinrichtungen automatisch betätigt und diesen hierbei aus einer Sperrposition in eine Freigabeposition bewegt. Der erste Sperrschiebermechanismus ist bevorzugt mechanisch aufgebaut.

Unter einem Mechanismus kann allgemein eine bauliche Zusammenfassung mehrerer Einzelkomponenten verstanden werden, die zur Erzielung einer bestimmten Funktion in einer vorbestimmten Art und Weise und insbesondere mechanisch zusammenwirken.

Ferner verfügt die erfindungsgemäße Übergabevorrichtung über einen zweiten Sperrschiebermechanismus, der den zweiten Sperrschieber beim In-Kontakt-Bringen bzw. beim Ineinandergreifen der Kupplungseinrichtungen automatisch betätigt und diesen hierbei aus einer Freigabeposition in eine Sperrposition bewegt. Der zweite Sperrschiebermechanismus ist bevorzugt mechanisch aufgebaut.

Zur Erzeugung der Stellbewegungen am ersten Sperrschieber und/oder am zweiten Sperrschieber kann der erste Sperrschiebermechanismus und/oder der zweite Sperrschiebermechanismus eine Kulissenführung bzw. eine Kulissensteuerungseinrichtung umfassen, mit der bzw. mit denen die Bewegung der oberen Kupplungseinrichtung relativ zu der unteren Kupplungseinrichtung beim Schließen des Blechbearbeitungswerkzeugs äußerst zuverlässig und fehlerfrei in ruhige und präzise Stellbewegungen am ersten Sperrschieber bzw. am zweiten Sperrschieber umgesetzt werden kann. Bevorzugt umfasst eine solche Kulissenführung eine Nut in der ein als Steuerrolle ausgebildeter Kulissenstein zwangsgeführt ist. Durch die konstruktive Gestaltung der Nutform bzw. des Nutverlaufs kann der Stellzeitpunkt, die Stellkraft, die Stellgeschwindigkeit und/oder der Stellweg bestimmt werden.

Bevorzugt ist vorgesehen, dass die unter Kupplungseinrichtung einen beweglich geführten Kupplungsschlitten aufweist, der beim Schließen des Blechbearbeitungswerkzeugs von der oberen Kupplungseinrichtung vertikal nach unten gedrückt wird. Die Bewegung des Kupplungsschlittens kann bspw. zur Betätigung des ersten Sperrschiebers und/oder des zweiten Sperrschiebers genutzt werden, insbesondere mittels über eine Kulissenführung bzw. Kulissensteuerungseinrichtung, wie vorausgehend erläutert. Die untere Kupplungseinrichtung kann wenigstens eine Federeinrichtung zur automatischen Rückstellung des Kupplungsschlittens (beim Öffnen des Blechbearbeitungswerkzeugs) in eine obere Ausgangslage aufweisen. Eine solche Federeinrichtung ist bspw. eine auf Druck beanspruchte Gasdruckfeder.

Bevorzugt ist vorgesehen, dass die obere Kupplungseinrichtung einen federkraftbeaufschlagten Klinkenschieber zum automatischen Weitertransport der übergebenen Einpresselemente aufweist. Bevorzugt ist vorgesehen, dass dieser Klinkenschieber erst beim Öffnen des Blechbearbeitungswerkzeugs und insbesondere erst beim Freiwerden der Kupplungseinrichtungen (d. h. beim Beenden oder nach Beenden des Kontakts bzw. des Eingriffs zwischen der oberen Kupplungseinrichtung und der unteren Kupplungseinrichtung) automatisch aktiviert wird und hierauf hin die übergebenen Einpresselemente weiterschiebt. Die Übergabevorrichtung kann über einen Stellmechanismus für das automatische Zurückbewegen bzw. Zurückschieben des Klinkenschiebers (beim Schließen des Blechbearbeitungswerkzeugs) verfügen.

Mit dem nebengeordneten Anspruch erstreckt sich die Lösung der Aufgabe auch auf ein Blechbearbeitungswerkzeug, das ein Werkzeugunterteil und ein Werkzeugoberteil aufweist, wobei im Werkzeugoberteil wenigstens ein Einpressstößel zum Einpressen von Einpresselementen angeordnet ist. Es ist vorgesehen, dass dieses Blechbearbeitungswerkzeug wenigstens eine erfindungsgemäße Übergabevorrichtung aufweist, mit der die mit dem Einpressstößel einzupressenden Einpresselemente pressentaktgebunden vom Werkzeugunterteil an das Werkzeugoberteil übergeben werden können.

Das Zusammenfahren (Schließen) und Auseinanderfahren (Öffnen) der Werkzeugteile wird durch eine Presse bewerkstelligt, in der das Blechbearbeitungswerkzeug eingebaut ist. Bevorzugt ist das Werkzeugoberteil am Pressenstößel befestigt und kann zusammen mit dem Pressenstößel verfahren und insbesondere in vertikaler Richtung verfahren werden. Das Werkzeugunterteil ist typischerweise auf dem Pressentisch befestigt und kann nicht verfahren werden. Die erfindungsgemäße Übergabevorrichtung dient demnach dazu, die Einpresselemente vom unbewegten Werkzeugunterteil an das bewegte Werkzeugoberteil zu übergeben.

Die vorausgehend und nachfolgend im Zusammenhang mit der erfindungsgemäßen Übergabevorrichtung erläuterten Weiterbildungen und Ausgestaltungen, sowie auch die sonstigen Erläuterungen, gelten analog auch für das beanspruchte Blechbearbeitungswerkzeug (was auch umgekehrt gilt).

An dieser Stelle soll ausdrücklich auch darauf hingewiesen werden, dass die erfindungsgemäße Übergabevorrichtung auch losgelöst von einem Blechbearbeitungswerkzeug betrieben werden kann, in dem z. B. die obere und/oder untere Kupplungseinrichtung direkt an der Presse angeordnet bzw. befestigt wird.

Im Übrigen kann die erfindungsgemäße Übergabevorrichtung auch für andere Einsatzzwecke verwendet werden, nämlich überall dort, wo Einpresselemente von einem unbewegten an ein zyklisch bewegtes Maschinenteil oder zwischen zwei zyklisch bewegten Maschinenteilen übergeben werden sollen.

Die Erfindung wird nachfolgend anhand eines in den Figuren gezeigten Ausführungsbeispiels näher beschrieben. Aus dieser Beschreibung und aus den Figuren ergeben sich weitere Merkmale und Vorteile der Erfindung. Dabei können einzelne Merkmale des Ausführungsbeispiels, unabhängig von gezeigten und/oder beschriebenen Merkmalskombinationen, zugleich allgemeine Merkmale der Erfindung darstellen.
- Fig. 1: zeigt eine erfindungsgemäße Übergabevorrichtung in einer perspektivischen Ansicht, wobei sich die obere Kupplungseinrichtung und die untere Kupplungseinrichtung außer Kontakt bzw. außer Eingriff befinden.
- Fig. 2: zeigt dieselbe Übergabevorrichtung ebenfalls in einer perspektivischen Ansicht, wobei sich die obere Kupplungseinrichtung und die untere Kupplungseinrichtung in Kontakt bzw. im Eingriff befinden.
- Fig. 3: zeigt dieselbe Übergabevorrichtung in einer Schnittansicht, wobei sich die obere Kupplungseinrichtung und die untere Kupplungseinrichtung entsprechend Fig. 1 außer Kontakt bzw. außer Eingriff befinden.
- Fig. 4: zeigt dieselbe Übergabevorrichtung ebenfalls in einer Schnittansicht, wobei sich die obere Kupplungseinrichtung und die untere Kupplungseinrichtung entsprechend Fig. 2 in Kontakt bzw. im Eingriff befinden.
- Fig. 5: zeigt dieselbe Übergabevorrichtung in einer Draufsicht mit freigegebenem Blick auf den ersten und den zweiten Sperrschieber, wobei sich die obere Kupplungseinrichtung und die untere Kupplungseinrichtung entsprechend Fig. 2 und Fig. 4 in Kontakt bzw. im Eingriff befinden.
- Fig. 6: zeigen in einer Seiteansicht einige Komponenten des ersten Sperrschiebermechanismus zur Betätigung des ersten Sperrschiebers.
- Fig. 7: zeigt in einer Seiteansicht einige Komponenten des zweiten Sperrschiebermechanismus zur Betätigung des zweiten Sperrschiebers.
- Fig. 8: zeigt in einer Vorderansicht einige Komponenten des Stellmechanismus zur automatischen Rückstellung eines Klinkenschiebers.

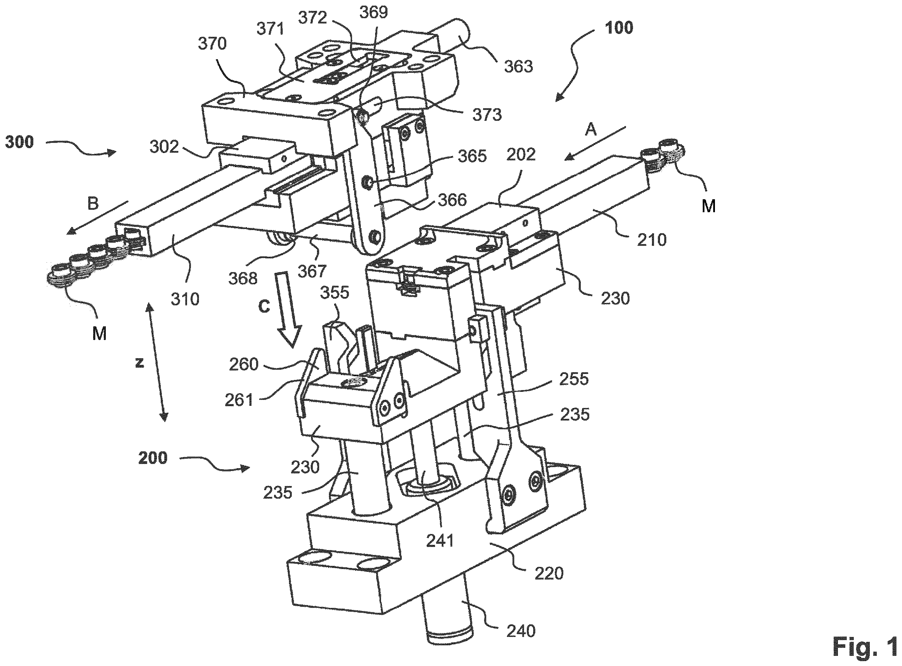

Fig. 1 zeigt eine erfindungsgemäße Übergabevorrichtung 100 zur Übergabe von Einpresselementen. Bei den zu übergebenden Einpresselementen handelt es sich um Muttern M, die nachfolgend in ein Blechmaterial eingepresst werden sollen. Die insgesamt mit 100 bezeichnete Übergabevorrichtung umfasst eine erste untere Kupplungseinrichtung bzw. Kupplungseinheit 200, die an einem nicht dargestellten Werkzeugunterteil (eines pressengebundenen Blechbearbeitungswerkzeugs) befestigt ist, und eine zweite obere Kupplungseinrichtung bzw. Kupplungseinheit 300, die an einem ebenfalls nicht dargestellten Werkzeugoberteil (desselben Blechbearbeitungswerkzeugs) befestigt ist. Beim Zusammenfahren bzw. Schließen des Blechbearbeitungswerkzeugs wird synchron die obere Kupplungseinrichtung 300 vertikal in Richtung der feststehenden unteren Kupplungseinrichtung 200 abgesenkt (Bewegung gemäß Pfeil C in z-Richtung), wobei es zum Kontakt zwischen den beiden Kupplungseinrichtungen 200 und 300 bzw. zum Eingriff der beiden Kupplungseinrichtungen 200 und 300 kommt, wie nachfolgend noch näher erläutert.

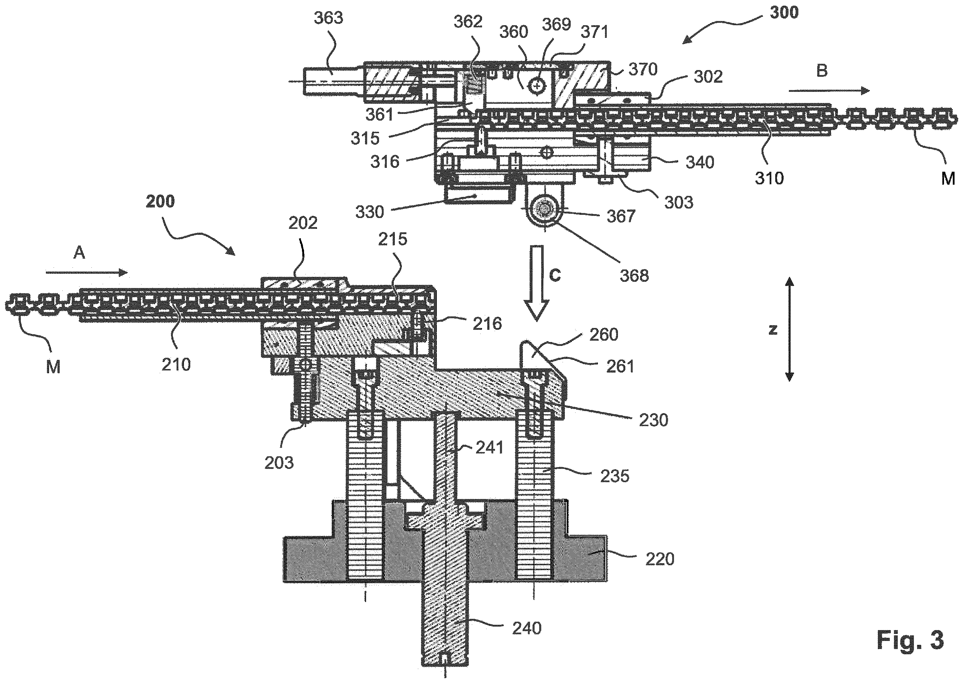

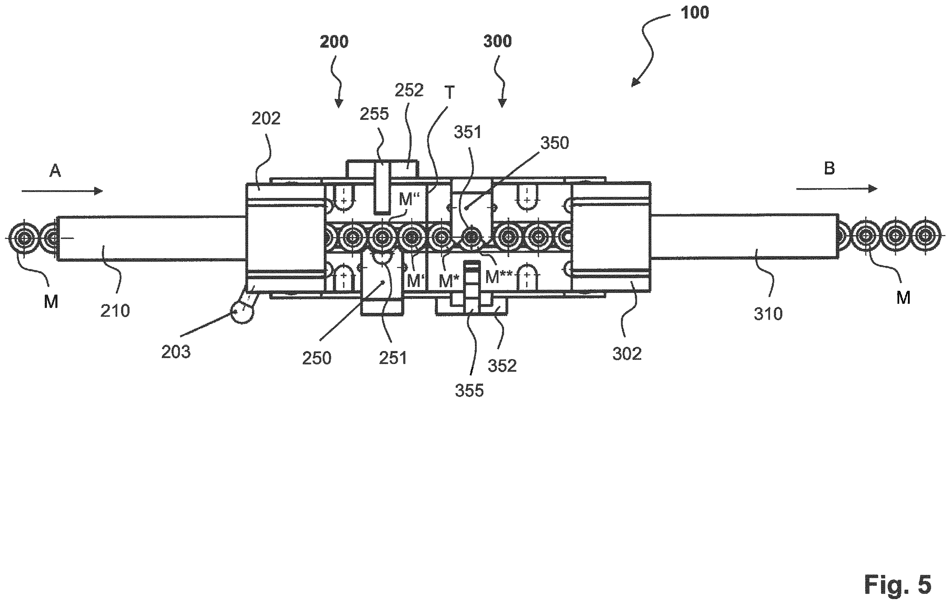

Mit 210 ist eine Zuführung zur unteren Kupplungseinrichtung 200 bezeichnet, durch die hindurch die in der Übergabevorrichtung 100 zu übergebenden und nachfolgend einzupressenden Muttern M in der mit A angegebenen Richtung von einer Zuführeinrichtung zugeführt werden. Das Zuführen erfolgt in einer so genannten schiebenden Förderung, wobei die Muttern M permanent auf Stoß aneinander anliegen und eine sich im gesamten bewegende Reihe bilden. Die Zuführung 210 kann ein flexibler Zuführschlauch sein, der mittels einer als Schnellkupplung ausgebildeten Schlauchkupplung 202 an die untere Kupplungseinrichtung 200 angebunden ist. Ein zur Betätigung der Schnellkupplung 202 dienender Schraubmechanismus bzw. Feststellmechanismus mit Schraubendruckfeder und Handhebel ist aus Fig. 3 und Fig. 5 ersichtlich (siehe Bezugszeichen 203).

Mit 310 ist eine Wegführung bzw. Abführung aus der oberen Kupplungseinrichtung 300 bezeichnet, durch die hindurch die in der Übergabevorrichtung 100 übergebenen und nachfolgend einzupressenden Muttern M in der mit B angegebenen Richtung ausgeleitet bzw. abgeführt werden, wobei die Muttern M direkt am Werkzeugoberteil bis zu einem Einpressstößel (oder zu einer Verteilstation) weitergefördert werden können. Auch hierbei handelt es sich um eine schiebende Förderung. Bei der Abführung 310 kann es sich um einen flexiblen Schlauch (oder gegebenenfalls auch um ein starres Rohr) handeln, der mittels einer Verbindungskupplung 302 an die obere Kupplungseinrichtung 300 angebunden ist. Ein zur Betätigung der Verbindungskupplung 302 dienender Schraubmechanismus bzw. Feststellmechanismus ist aus Fig. 3 ersichtlich (siehe Bezugszeichen 303).

Die unter Kupplungseinrichtung 200 weist einen Grundblock 220 auf, mit dem die untere Kupplungseinrichtung 200 ortsfest am Werkzeugunterteil (oder alternativ auch an der Presse) befestigt ist und die als Träger für die übrigen Komponenten der unteren Kupplungseinrichtung 200 dient. Ferner weist die untere Kupplungseinrichtung 200 einen vertikal bewegbaren bzw. in z-Richtung bewegbaren Kupplungsschlitten 230 auf, der mittels einer Gasdruckfeder 240 (oder dergleichen) nach oben vorgespannt ist. Die am Grundblock 220 befestigte Gasdruckfeder 240 ist über die Stange 241 mit dem Kupplungsschlitten 230 verbunden.

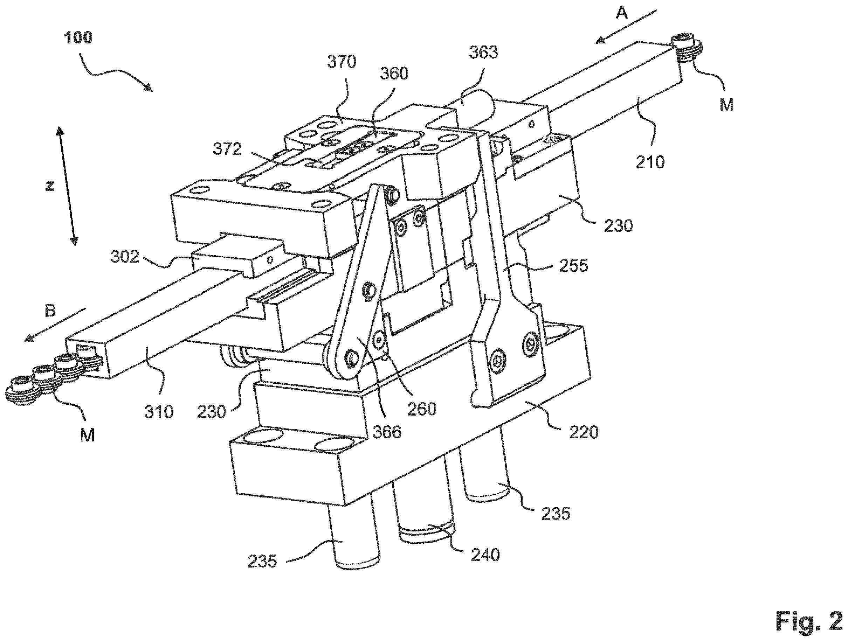

Beim Schließen des Blechbearbeitungswerkzeugs (Richtung C) wird der Kupplungsschlitten 230 von der oberen Kupplungseinrichtung 300 entgegen der von der Gasdruckfeder 240 erzeugten Kraftwirkung in z-Richtung bis zu einem unteren Totpunkt (UT; siehe Fig. 2) nach unten bzw. abwärts bewegt. Beim Öffnen des Blechbearbeitungswerkzeugs in der entgegengesetzten Richtung (-C) bewirkt die Gasdruckfeder 240 die Rückstellung des Kupplungsschlittens 230 in die Ausgangsposition, wie in Fig. 1 gezeigt. Mit 235 sind zwei kolbenartige Linearführungen für den Kupplungsschlitten 230 bezeichnet, die gleitend durch korrespondierende Führungsbohrungen in der Grundplatte 220 hindurchgeführt sein.

Weitere Komponenten der unteren Kupplungseinrichtung 200 und auch der oberen Kupplungseinrichtung 300 werden nachfolgend im Zusammenhang mit den jeweiligen Funktionen erläutert.

Beim pressentaktgebunden Schließen der Übergabevorrichtung 100 kommt es zum Kontakt bzw. zum Eingriff zwischen der unteren Kupplungseinrichtung 200 und der oberen Kupplungseinrichtung 300. Hierbei wird die obere Kupplungseinrichtung 300 in z-Richtung abwärts bewegt, wie in Fig. 1 mit dem Pfeil C veranschaulicht, bis diese auf dem zur unteren Kupplungseinrichtung 200 gehörenden Kupplungsschlitten 230 aufsitzt. Während der weiteren Abwärtsbewegung der oberen Kupplungseinrichtung 300 wird der Kupplungsschlitten 230 gegen die Gasdruckfeder 240 nach unten gedrückt, wie vorausgehend erläutert, bis schließlich der in Fig. 2 dargestellte untere Totpunkt erreicht ist. Dieser Zustand kann auch als geschlossener Zustand bezeichnet werden (im Gegensatz zu einem geöffneten Zustand bei dem sich die Kupplungseinrichtungen 200 und 300 nicht im Kontakt bzw. nicht im Eingriff befinden).

Fig. 2 zeigt die erfindungsgemäße Übergabevorrichtung 100 im geschlossenen Zustand, wobei sich die untere Kupplungseinrichtung 200 und die obere Kupplungseinrichtung 300 im Eingriff befinden. Hierbei kommt es zur Überdeckung zwischen einem an der unteren Kupplungseinrichtung 200 vorhandenen Übergabekanal 215 (siehe Fig. 3) und einem an der oberen Kupplungseinrichtung 300 vorhandenen Übernahmekanal 315 (siehe Fig. 3), wobei ein Durchlass geschaffen wird, durch den hindurch eine Mutter M (oder gegebenenfalls auch mehrere Muttern M) von der unteren Kupplungseinrichtung 200 an die obere Kupplungseinrichtung 300 übergeben werden kann. Um ein undefiniertes Durchfördern von Muttern M durch diesen Durchlass zu verhindern ist die Übergabevorrichtung 100 mit einem ersten Sperrschieber 250 und zugehörigem ersten Sperrschiebermechanismus und mit einem zweiten Sperrschieber 350 und zugehörigem zweiten Sperrschiebermechanismus ausgestattet, was nachfolgend anhand der Fig. 3 bis 7 erläutert wird.

So lange sich die Übergabevorrichtung 100 in einem wie in der Fig. 3 dargestellten geöffneten Zustand befindet wird der in der unteren Kupplungseinrichtung 200 ausgebildete Übergabekanal 215 von einem ersten Sperrschieber 250 verschlossen bzw. versperrt, um zu verhindern, dass die über die Zuführung 210 zugeführten und permanent unter Förderdruck stehenden Muttern M aus dem offenen Ende des Übergabekanals 215 herausgefördert werden (das offene Ende des Übergabekanals 215 ist gut in Fig. 1 zu erkennen). Beim Schließen der Übergabevorrichtung 100 wird der erste Sperrschieber 250 automatisch aus einer Sperrposition in eine Freigabeposition bewegt. Fig. 5 zeigt die Übergabevorrichtung 100 im geschlossenen Zustand, wobei sich der erste Sperrschieber 250 in der Freigabeposition befindet.

Der erste Sperrschieber 250 dient demnach dazu, den Übergabekanal 215 an der unteren Kupplungseinrichtung 200, in Abhängigkeit davon ob sich die Kupplungseinrichtungen 200 und 300 im Eingriff oder außen Eingriff befinden, zu versperren oder frei zu geben. Zur automatischen Betätigung des ersten Sperrschiebers 250 ist ein erster Sperrschiebermechanismus vorgesehen, der die erzwungene Bewegung des Kupplungsschlittens 230 (relativ zum Grundblock 220) beim Schließen und Öffnen der Übergabevorrichtung 100 in eine Stellbewegung am ersten Sperrschieber 250 umsetzt. Dies erfolgt derart, dass der erste Sperrschieber 250 beim Schließen der Übergabevorrichtung 100 automatisch aus der Sperrposition in die Freigabeposition bewegt wird und beim Öffnen der Übergabevorrichtung 100 automatisch aus der Freigabeposition in die Sperrposition bewegt wird. Die Stellbewegungen am ersten Sperrschieber 250 erfolgen quer zur Förderrichtung (A bzw. B) der Muttern M.

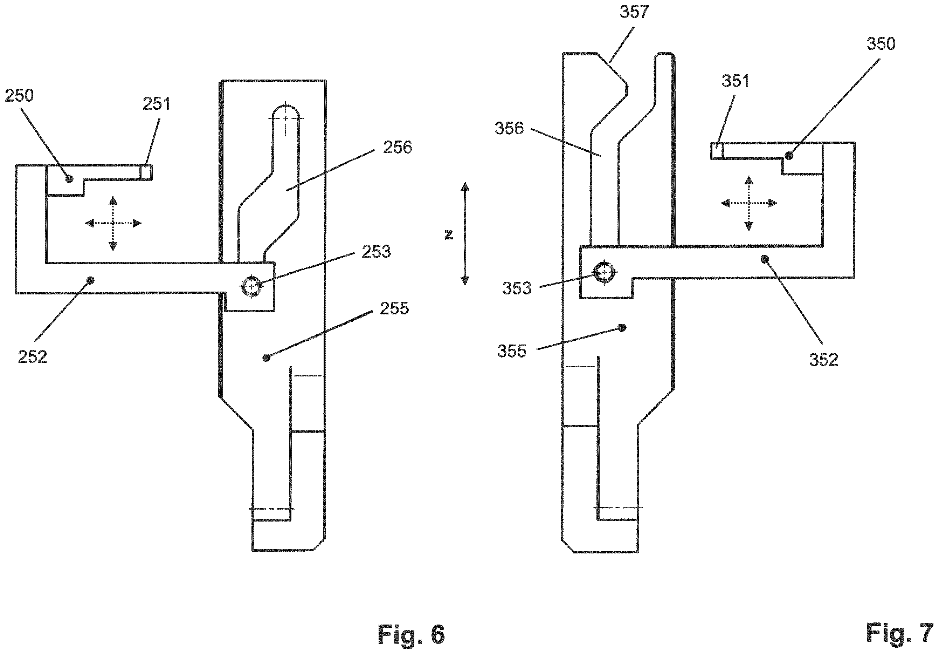

Fig. 6 zeigt mehrere zum ersten Sperrschiebermechanismus gehörende Komponenten. Der erste Sperrschiebermechanismus zur Betätigung des ersten Sperrschiebers 250 umfasst eine feststehende Steuerplatte 255 mit einer geschlossenen Führungsnut 256. Die Steuerplatte 255 ist starr am Grundblock 220 befestigt (siehe Fig. 1). Der erste Sperrschieber 250 ist über einen starren ersten Umlenkschieber 252 und eine wälzgelagerte Steuerrolle 253 permanent mit der Führungsnut 256 verbunden, wodurch eine Zwangsführung ausgebildet ist. Der Umlenkschieber 252 dient im Übrigen auch zur Halterung und Führung des ersten Sperrschiebers 250 in der unteren Kupplungseinrichtung 200. Beim Abwärtsbewegen des am Kupplungsschlitten 230 gehaltenen ersten Sperrschiebers 250 wird dieser in seitlicher Richtung ausgelenkt, was sich anschaulich aus Fig. 6 ergibt, und wird dadurch aus der Sperrposition in die Freigabeposition bewegt (gemäß der Darstellung in Fig. 6 entspricht dieser einer Stellbewegung nach links). Beim Aufwärtsbewegen des ersten Sperrschiebers 250 aus der in Fig. 6 gezeigten untersten Stellung bzw. Position wird dieser von der Freigabeposition in die Sperrposition zurückbewegt (Stellbewegung nach links).

Wie aus der in Fig. 5 gezeigten Draufsicht ersichtlich, ist der erste Sperrschieber 250 an seinem vorderen freien Ende mit einem eingeformten Greifauschnitt 251 ausgebildet, wobei sich dieser Greifausschnitt 251 zwischen zwei gabelzinkenartigen Fortsätzen mit Einführschrägen befindet. Die Kontur des Greifausschnitts 251 ist an die zu übergebenden Muttern M angepasst, so dass im Übergabekanal 215 eine zu übergebende Mutter M" von dem in Sperrposition befindlichen ersten Sperrschieber 250 formschlüssig gegriffen und festgehalten werden kann, wodurch alle von der Zuführeinrichtung kommenden Muttern M gestaut werden. Das Versperren des Übergabekanals 215 erfolgt demnach durch direktes Festhalten einer Mutter M" in diesem Übergabekanal 215.

Die Trennebene bzw. Trennstelle zwischen der unteren Kupplungseinrichtung 200 und der oberen Kupplungseinrichtung 300 ist mit T bezeichnet. Beim Übergeben einer Mutter M muss diese gemäß der Darstellung in Fig. 5 die Trennebene T von lins nach rechts passieren.

Wie ferner aus Fig. 5 ersichtlich, wird mit dem ersten Sperrschieber 250 nicht die unmittelbar an der Trennebene T befindliche letzte bzw. als nächstes zu übergebende Mutter M' gegriffen, sondern die vorletzte Mutter M". Der erste Sperrschieber 250 ist dementsprechend angeordnet und ausgebildet. Das Greifen und Festhalten der vorletzten Mutter M" kann zuverlässiger erfolgen als das Greifen und Festhalten der letzten unmittelbar an der Trennebene T befindlichen Mutter M'. Auch konstruktiv lässt sich das Greifen und Festhalten der vorletzten Mutter M" einfacher realisieren.

Beim Festhalten der vorletzten Mutter M" durch den in der Sperrposition befindlichen ersten Sperrschieber 250 erfolgt eine Ausrichtung der festegehaltenen Mutter M", derart, dass noch exakt eine als nächstes zu übergebene Mutter M' daneben passt, ohne dass diese über die Trennebene T hervorsteht bzw. aus dem Übergabekanal 215 hinausragt. Um bei geöffneter Übergabevorrichtung 100 das Herausfallen der letzten Mutter M' am offenen Ende des Übergabekanals 215 zu verhindern, ist ein in der unteren Kupplungseinrichtung 200 verbauter und in den Übergabekanal 215 hineinragender und einstellbarer Federstift 216 (oder einem Magnethalter oder dergleichen) vorgesehen, der die letzte Mutter M' mit ausreichender jedoch nicht zu hoher Kraft festhält und auch gegen unkontrolliertes Verrutschen sichert (siehe Fig. 3).

Die obere Kupplungseinrichtung 300 ist mit einem zweiten Sperrschieber 350 ausgestattet. Der zweite Sperrschieber 350 dient dazu, den Übernahmekanal 315 an der oberen Kupplungseinrichtung 300, in Abhängigkeit davon ob sich die Kupplungseinrichtungen 200 und 300 im Eingriff oder außen Eingriff befinden, frei zu geben oder zu versperren. So lange sich die Übergabevorrichtung 100 in einem geöffneten Zustand befindet, befindet sich der zweite Sperrschieber 350 in einer Freigabeposition. Beim Schließen der Übergabevorrichtung 100 wird der zweite Sperrschieber 350 automatisch aus der Freigabeposition in eine Sperrposition bewegt. Fig. 5 zeigt die Übergabevorrichtung 100 im geschlossenen Zustand, wobei sich der zweite Sperrschieber 350 in der Sperrposition befindet.

Zur automatischen Betätigung des zweiten Sperrschiebers 350 ist ein zweiter Sperrschiebermechanismus vorgesehen, der die Bewegung der oberen Kupplungseinrichtung 300 relativ zur unteren Kupplungseinrichtung 200 (und insbesondere relativ zum Grundblock 220) in eine Stellbewegung am zweiten Sperrschieber 350 umsetzt. Dies erfolgt derart, dass der zweite Sperrschieber 350 beim Schließen der Übergabevorrichtung 100 automatisch aus der Freigabeposition in die Sperrposition bewegt wird und beim Öffnen der Übergabevorrichtung 100 automatisch aus der Sperrposition in die Freigabeposition bewegt wird. Der erste Sperrschieber 250 an der unteren Kupplungseinrichtung 200 und der zweiten Sperrschieber 350 an der oberen Kupplungseinrichtung 300 werden demnach automatisch in entgegengesetzter Weise betätigt. Die Stellbewegungen am zweiten Sperrschieber 350 erfolgen quer zur Förderrichtung (A bzw. B) der Muttern M.

Fig. 7 zeigt mehrere zum zweiten Sperrschiebermechanismus gehörende Komponenten. Der zweite Sperrschiebermechanismus zur Betätigung des zweiten Sperrschiebers 350 umfasst eine feststehende Steuerplatte 355 mit einer nach oben offenen Führungsnut 356. Die Steuerplatte 355 ist starr am Grundblock 220 befestigt (siehe Fig. 1). Der zweite Sperrschieber 350 kann über einen starren zweiten Umlenkschieber 352 und eine wälzgelagerte Steuerrolle 353 mit der Führungsnut 356 verbunden werden, wodurch eine Zwangsführung herbeigeführt ist. Der Umlenkschieber 352 dient im Übrigen auch zur Halterung und Führung des zweiten Sperrschiebers 350 in der oberen Kupplungseinrichtung 300.

Beim Schließen der Übergabevorrichtung 100 wird die am Umlenkschieber 352 gehaltene Steuerrolle 353 von oben in die Führungsnut 356 eingeführt. Die Führungsnut 356 ist an ihrem oberen offenen Ende mit einer Einführschräge 357 ausgebildet, die ein sicheres Einführen der Steuerrolle 353 unabhängig von der momentanen Stellung bzw. Position des zweiten Sperrschiebers 350 gewährleistet (ein Vorspannen des zweiten Sperrschiebers 350 in die Freigabeposition kann dadurch entfallen). Beim anschließenden weiteren Abwärtsbewegen der oberen Kupplungseinrichtung 300 zusammen mit dem zweiten Sperrschieber 350 wird dieser in seitlicher Richtung ausgelenkt, was sich anschaulich aus Fig. 7 ergibt, und wird hierbei aus der Freigabeposition in die Sperrposition bewegt (gemäß der Darstellung in Fig. 7 entspricht dieser einer Stellbewegung nach links). Beim Aufwärtsbewegen aus der in Fig. 7 gezeigten untersten Stellung wird der zweite Sperrschieber 350 von der Sperrposition in die Freigabeposition zurückbewegt (Stellbewegung nach rechts).

Wie aus der in Fig. 5 gezeigten Draufsicht ersichtlich, ist auch der zweite Sperrschieber 350 an seinem vorderen Ende mit einem eingeformten Greifauschnitt 351 ausgebildet, wobei sich dieser Greifausschnitt 351 zwischen zwei gabelzinkenartigen Fortsätzen mit Einführschrägen befindet. Die Kontur des Greifausschnitts 351 ist an die zu übergebenden Muttern M angepasst. Mit dem in Sperrposition befindlichen zweiten Sperrschieber 350 und dem daran angeformten Greifausschnitt 351 kann eine bereits übergebene und im Übernahmekanal 315 befindliche Mutter M** zuverlässig gegriffen werden, wodurch der Übernahmekanal 315 in beide Richtungen wirksam verschlossen bzw. versperrt wird. Das Versperren des Übernahmekanals 315 erfolgt demnach durch direktes Festhalten einer Mutter M** in diesem Übernahmekanal 315.

Wie ferner aus Fig. 5 ersichtlich, erfolgt das Versperren des Übernahmekanals 315 nicht unmittelbar an der Trennebene T, sondern um eine Mutternlänge (bzw. um den Durchmesser einer Mutter M) von der Trennebene T entfernt. Der zweite Sperrschieber 350 ist dementsprechend angeordnet und ausgebildet. Das Greifen und Festhalten einer Mutter M** kann an dieser Stelle zuverlässiger erfolgen als das Greifen und Festhalten direkt an der Trennebene T. Auch konstruktiv lässt sich das Greifen und Festhalten einer Mutter M** an dieser Stelle einfacher realisieren. Beim Festhalten der Mutter M** durch den in der Sperrposition befindlichen zweiten Sperrschieber 350 erfolgt eine Ausrichtung der festegehaltenen Mutter M**, derart, dass noch exakt eine übergebene Mutter M* daneben passt, ohne dass diese über die Trennebene T hervorsteht bzw. aus dem Übernahmekanal 315 hinausragt.

Die Übergabe einer Mutter M in der Übergabevorrichtung 100 vollzieht sich wie nachfolgend beschrieben. Beim Schließen der Presse bzw. des Blechbearbeitungswerkzeugs wird die obere Kupplungseinrichtung 300 in vertikaler Richtung z bzw. in Richtung der unteren Kupplungseinrichtung 200 abgesenkt, wie in den Fig. 1 und 3 mit dem Pfeil C veranschaulicht. (Hierbei kann der vom oberen Totpunkt bis zum unteren Totpunkt zurückzulegende Fahrweg der oberen Kupplungseinrichtung 300 ein Vielfaches des in der Fig. 1 oder Fig. 3 dargestellten vertikalen Abstands zwischen der oberen Kupplungseinrichtung 300 und der unteren Kupplungseinrichtung 200 betragen.)

Zu diesem Zeitpunkt befindet sich der erste Sperrschieber 250 an der unteren Kupplungseinrichtung 200 in der Sperrposition und der zweite Sperrschieber 350 an der oberen Kupplungseinrichtung 300 befindet sich in der Freigabeposition. Ein an der oberen Kupplungseinrichtung 300 befindlicher und in den Übernahmekanal 315 hineinragender und einstellbaren Federstift 316 (oder dergleichen) verhindert das unkontrollierte Verrutschen oder Herausfallen von Muttern M am offenen Ende des Übernahmekanals 315.

Im Zuge der Abwärtsbewegung setzt die obere Kupplungseinrichtung 300 mit der Kupplungsplatte 330 auf dem Kupplungsschlitten 230 an der unteren Kupplungseinrichtung 200 auf. Hierbei kommt es zu einer exakten Überdeckung zwischen dem Übergabekanal 215 in der unteren Kupplungseinrichtung 200 und dem Übernahmekanal 315 in der oberen Kupplungseinrichtung 300, derart, dass sich die offenen Enden dieser Kanäle weitgehend spaltfrei gegenüberliegen. Die Kupplungsplatte 330 ist an der Unterseite einer Grundplatte 340 befestigt.

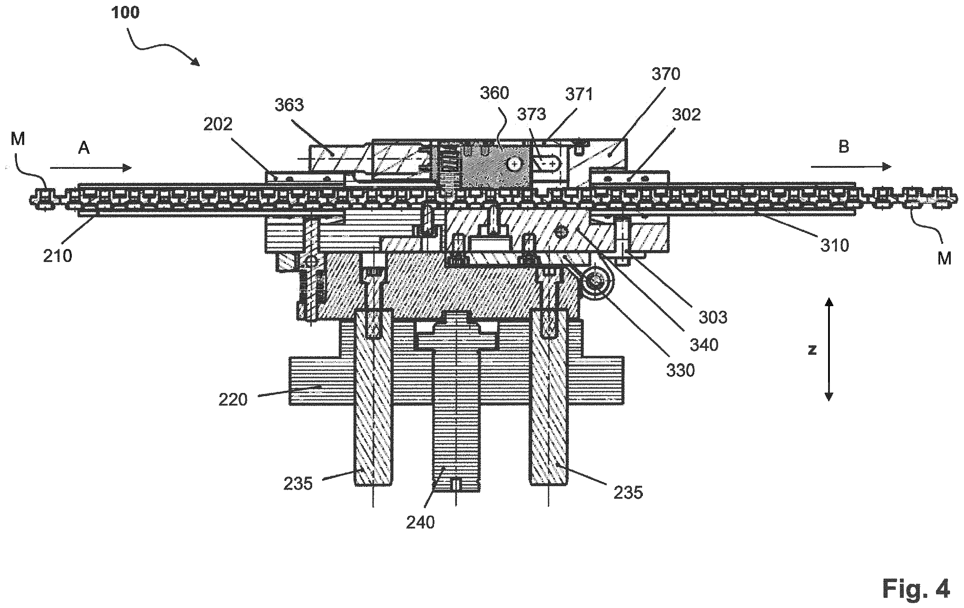

Im Zuge der gemeinsamen weiteren Abwärtsbewegung der oberen Kupplungseinrichtung 300 und des Kupplungsschlittens 230 werden die Sperrschieber 250 und 350 betätigt, wie vorausgehend erläutert. Hierbei wird der erste Sperrschieber 250 an der unteren Kupplungseinrichtung 200 automatisch aus der Sperrposition in die Freigabeposition bewegt. Im Wesentlichen gleichzeitig wird der zweite Sperrschieber 350 an der oberen Kupplungseinrichtung 300 automatisch aus der Freigabeposition in die Sperrposition bewegt. Diese Veränderung der Schieberstellungen ist spätestens im unteren Totpunkt der Bewegung (gemäß Darstellung in Fig. 2 und 4) und insbesondere bereits vor Erreichen des unteren Totpunkts abgeschlossen.

Die durch konstruktive Ausgestaltung vorgegebene vertikale Bewegungsstrecke des Kupplungsschlittens 230 wird für die Sperrschieberbetätigung benötigt, wobei die aufgezwungene Abwärtsbewegung (und auch die sich anschließende Aufwärtsbewegung) mittels der Sperrschiebermechanismen in Stellbewegungen an den Sperrschiebern 250 und 350 umgesetzt wird. Über die vertikale Bewegungsstrecke des Kupplungsschlittens 230 kann ferner die absolute Überdeckungszeit zwischen dem Übergabekanal 215 in der unteren Kupplungseinrichtung 200 und dem Übernahmekanal 315 in der oberen Kupplungseinrichtung 300 während des Eingriffs der Kupplungseinrichtungen 200 und 300 eingestellt werden.

Nachdem der erste Sperrschieber 250 von der Sperrposition in die Freigabeposition bewegt wurde kann die als nächstes zu übergebende Mutter M' vom Übergabekanal 215 in den Übernahmekanal 315 eingeschoben werden, wobei die Trennebene T (von links nach rechts) passiert wird. Die Übergabe erfolgt in horizontaler Richtung (siehe Fig. 4). Die hierzu erforderliche Förderkraft wird durch die Zuführeinrichtung erzeugt. Die Zuführeinrichtung beaufschlagt die in der Zuführung 210 und im Übergabekanal 215 befindlichen Muttern M permanent mit Förderdruck. Dadurch erfolgt das Einschieben der zu übergebenden Mutter M' in den Übernahmekanal 315 unmittelbar nachdem der erste Sperrschieber 250 aus seiner Sperrposition in Richtung der Freigabeposition bewegt wird. Um zu verhindern, dass die zu übergebende Mutter M' unkontrolliert übergeben wird ist idealerweise vorgesehen, dass der erste Sperrschieber 250 erst dann aus seiner Sperrposition herausbewegt, wenn sich der zweite Sperrschieber 350 bereits in der Sperrposition befindet.

Das Einschieben der zu übergebenden Mutter M' in den Übernahmekanal 315 wird möglich, weil zu diesem Zeitpunkt der Platz vor dem in Sperrposition befindlichen zweiten Sperrschieber 350 frei bzw. nicht durch eine Mutter M besetzt ist, wie nachfolgend noch näher erläutert. Die zu übergebende Mutter M' wird an diesen freien Platz vor dem zweiten Sperrschieber 350 geschoben und wird hierdurch zur aufgenommenen Mutter M*. Die mit dem zweiten Sperrschieber 350 positionsgenau festgehaltene Mutter M** gewährleistet, dass nur eine Mutter M* im Übernahmekanal 350 aufgenommen werden kann. Der zweite Sperrschieber 350 fungiert demnach als Bewegungsanschlag.

Durch den ersten Sperrschieber 250 an der unteren Kupplungseinrichtung 200 und durch den zweiten Sperrschieber 350 an der oberen Kupplungseinrichtung 350 und durch die wechselweise Betätigung dieser beiden Sperrschieber wird eine Schleuse geschaffen, die, insbesondere auch bei hohen Pressenhubzahlen und/oder Stößelgeschwindigkeiten, eine sichere, zuverlässige und fehlerfreie Übergabe exakt einer Mutter M' bzw. M* während eines Schließzyklus (d. h. während des Eingriffs der Kupplungseinrichtungen 200 und 300) ermöglicht, trotz des Umstands, dass die zugeführten Muttern M permanent unter Förderdruck stehen. Durch entsprechende konstruktive Ausgestaltung der Übergabevorrichtung 100 kann in gleicher Weise auch die Übergabe mehrerer Muttern M während eines Schließzyklus bewerkstelligt werden.

Der durch das Übergeben der Mutter M' frei werdende Platz im Übergabekanal 215 wird sofort durch eine nachfolgende Mutter M ersetzt, welche sodann die im nächsten Schließzyklus zu übergebende Mutter M' bildet. Nach der Übergabe einer Mutter M berühren sich die im Übernahmekanal 315 aufgenommene Mutter M* und die im Übergabekanal 215 befindliche und als nächstes zu übergebende Mutter M' direkt in der Trennebene T (und stehen hierbei unverändert unter Förderdruck). Diese exakte Positionierung wird durch die mit dem zweiten Sperrschieber 350 festgehaltene Mutter M** erreicht. Insofern kann der zweite Sperrschieber 350 auch als Positionier- bzw. Zentrierschieber bezeichnet werden.

Fig. 5 zeigt den Zustand nach der Übergabe der Mutter M* von der unteren Kupplungseinrichtung 200 an die obere Kupplungseinrichtung 300, wobei der frei gewordene Platz im Übergabekanal 215 der unteren Kupplungseinrichtung 200 bereits durch eine nachgerückte bzw. nachgeschobene Mutter M' besetzt ist. Zu diesem Zeitpunkt kann sich die obere Kupplungseinrichtung 300 zusammen mit dem Kupplungsschlitten 230 im unteren Totpunkt befinden (wie in Fig. 4 dargestellt). Wie ferner aus Fig. 5 ersichtlich, sind die Sperrschieber 250 und 350 an sich gegenüberliegenden Längsseiten der Übergabevorrichtung 100 angeordnet und werden entsprechend ihrer Anordnung gegensätzlich und quer zur Förderrichtung A bzw. B betätigt.

Nachdem der untere Totpunkt erreicht ist (siehe Fig. 4), wird die obere Kupplungseinrichtung 300 in vertikaler Richtung wieder aufwärts bewegt. Der Kupplungsschlitten 230 folgt dieser Aufwärtsbewegung, was durch die Gasdruckfeder 240 bewerkstelligt wird. Hierbei wird der erste Sperrschieber 250 an der unteren Kupplungseinrichtung 200 automatisch aus der Freigabeposition in die Sperrposition bewegt und ergreift hierbei die Mutter M". Im Wesentlichen gleichzeitig wird der zweite Sperrschieber 350 an der oberen Kupplungseinrichtung 300 automatisch aus der Sperrposition in die Freigabeposition bewegt. Bevorzugt ist vorgesehen, dass zuerst der erste Sperrschieber 250 und unmittelbar danach oder zeitversetzt der zweite Sperrschieber 350 betätigt wird.

Im weiteren Verlauf der Aufwärtsbewegung hebt die obere Kupplungseinrichtung 300 von der unteren Kupplungseinrichtung 200 ab, nämlich dann, wenn der Kupplungsschlitten 230 seine obere Endlage bzw. seinen oberen Totpunkt (der nicht dem oberen Totpunkt der oberen Kupplungseinrichtung 300 entspricht) erreicht hat. Hierbei kommt es zur Trennung entlang der Trennebene T, ohne dass diese Trennung durch die exakt positionierten Muttern M' und M* beeinträchtigt wird. Der erste Sperrschieber 250 muss sich spätestens dann in der Sperrposition befinden, wenn diese Trennung erfolgt.

Nach dem Trennen bzw. Auseinanderfahren der beiden Kupplungseinrichtungen 200 und 300 wird die in die obere Kupplungseinrichtung 300 übernommene Mutter M* im Übernahmekanal 315 weiterbewegt. Hierbei wird die Mutter M* von der Trennebene T fortbewegt, so dass an der Übernahmestelle wieder ein freier Platz geschaffen wird, der beim nächsten Schließvorgang von einer weiteren aufzunehmenden Mutter M* besetzt werden kann. Die Weiterbewegung erfolgt in Förderrichtung B, d. h. weg vom offenen Ende des Übernahmekanals 315. Diese Weiterbewegung wird durch die zuvor verbrauchte bzw. eingepresste Mutter ermöglicht, wodurch im Abführkanal 310 ein freier Platz entstanden ist.

Wurde während des vorausgehenden Pressenhubs keine Mutter M verbraucht bzw. verpresst (bspw. bei einem unterbrochenen Pressenhub oder bei einem Leerhub), kann an der Übergabestelle kein freier Platz geschaffen werden, so dass beim nächsten Schließzyklus auch keine Mutter von der unteren Kupplungseinrichtung 200 an die obere Kupplungseinrichtung 300 übergeben werden kann. Dadurch sind Fehler bei der Übergabe und etwaige Schäden ausgeschlossen.

Das Weiterbewegen der übernommenen Mutter M* (oder gegebenenfalls auch mehrerer übernommener Muttern) wird durch einen federkraftbeaufschlagten Klinkenmechanismus in der oberen Kupplungseinrichtung 300 bewerkstelligt, wie nachfolgend näher erläutert.

Zum Klinkenmechanismus in der oberen Kupplungseinrichtung 300 gehört ein linear beweglicher Klinkenschieber 360, wie sehr gut aus Fig. 3 ersichtlich. Der Klinkenschieber 360 ist im Wesentlichen horizontal hin und her bewegbar in der obere Kupplungseinrichtung 300 gelagert und wird durch eine Gasdruckfeder 363 direkt und permanent mit einer Kraft beaufschlagt. Mit 370 ist ein Gehäuseblock bzw. ein Schiebergehäuse zur Aufnahme des Klinkenschiebers 360 und mit 371 ist ein Gehäusedeckel bezeichnet. Zur Führung des Klinkenschiebers 360 ist im Deckel 371 ein Langloch 372 ausgebildet, wie aus den Fig. 1 und 2 ersichtlich.

Die durch die Gasdruckfeder 363 erzeugte Druckkraft zwängt den Klinkenschieber 360 in die Förderrichtung B, wobei der am Klinkenschieber 360 angeordnete Klinkenhaken 361 die letzte bzw. zuletzt übernommene Mutter M* im Übernahmekanal 315 hintergreift und somit sämtliche im Übernahmekanal 315 und in der Abführung 310 befindlichen und auf Stoß aneinander anliegenden Muttern M weiterschiebt und unter Förderdruck hält, was jedoch erst dann erfolgen kann, wenn der zweite Sperrschieber 350 nicht mehr in Sperrposition ist. Hierbei wird also auch die zuletzt übernommene Mutter M* in der Förderrichtung B von der Trennebene T wegbewegt, wodurch am offenen Ende des Übernahmekanals 315 wieder ein freier Platz zur nachfolgenden Aufnahme einer weiteren Mutter M* geschaffen wird. Gleichzeitig verhindert der Klinkenhaken 361, dass Muttern M aus dem offenen Ende des Übernahmekanals 315 herausfallen können. Eine ergänzende Sicherung ist durch den Federstift 316 gegeben, wie bereits erläutert.

Nachdem der Klinkenschieber 360 die zuletzt übernommene Mutter M* weiterbewegt bzw. weitergeschoben hat, muss dieser wieder entgegen der von der Gasdruckfeder 363 erzeugten Druckkraft in eine Anfangslage zurückbewegt werden, um die nächste übernommene Mutter M* greifen und in Förderrichtung B weiterschieben zu können. Das Zurückbewegen des Klinkenschiebers 360 in die Ausgangslage wird beim Schließen der Übergabevorrichtung 100 von einem Stellmechanismus bzw. Rückstellstellmechanismus bewerkstelligt, wie nachfolgend erläutert.

Der Stellmechanismus zum Rückstellen bzw. Zurückbewegen des Klinkenschiebers 360 umfasst zwei Kipphebel 366, die über Schwenkgelenke 365 schwenkbar an der oberen Kupplungseinrichtung 300 angeordnet sind (siehe Fig. 1). An ihren unteren freien Enden sind die Kipphebel 366 mit einem Querbolzen 367 verbunden. An ihren oberen freien Enden liegen die Kipphebel 366 an Zapfen 369 an, die seitlich am Klinkenschieber 360 befestigt und durch Führungsnute 373 im Gehäuseblock 370 nach außen geführt sind.

Beim Schließen der Übergabevorrichtung 100 werden die Kipphebel 366 verschwenkt und drücken hierbei den Klinkenschieber 360 über die Zapfen 369 entgegen der Kraftwirkung durch die Gasdruckfeder 363 zurück. Das Verschwenken der Kipphebel 366 beim Schließen der Übergabevorrichtung 100 wird durch feststehende Führungsplatten 260 an der unteren Kupplungseinrichtung 200 herbeigeführt. Die Führungsplatten 260 sind mit schrägen Gleitflächen 261 ausgebildet, auf denen der Querbolzen 367 während der Abwärtsbewegung der oberen Kupplungseinrichtung 300 abgleitet und hierbei sukzessive weggedrückt bzw. ausgelenkt wird. Um die Reibung zwischen dem Querbolzen 367 und den Gleitflächen 261 zu reduzieren sind Wälzlager oder Treibrollen 368 vorgesehen. Auch an den Zapfen 369 können Wälzlager oder Treibrollen vorgesehen sein. Der für das Zurückschieben des Klinkenschiebers 360 erforderliche Weg und/oder die erforderliche Kraft kann durch konstruktive Ausgestaltung von Hebel-, Winkel- und/oder Wegverhältnissen eingestellt werden.

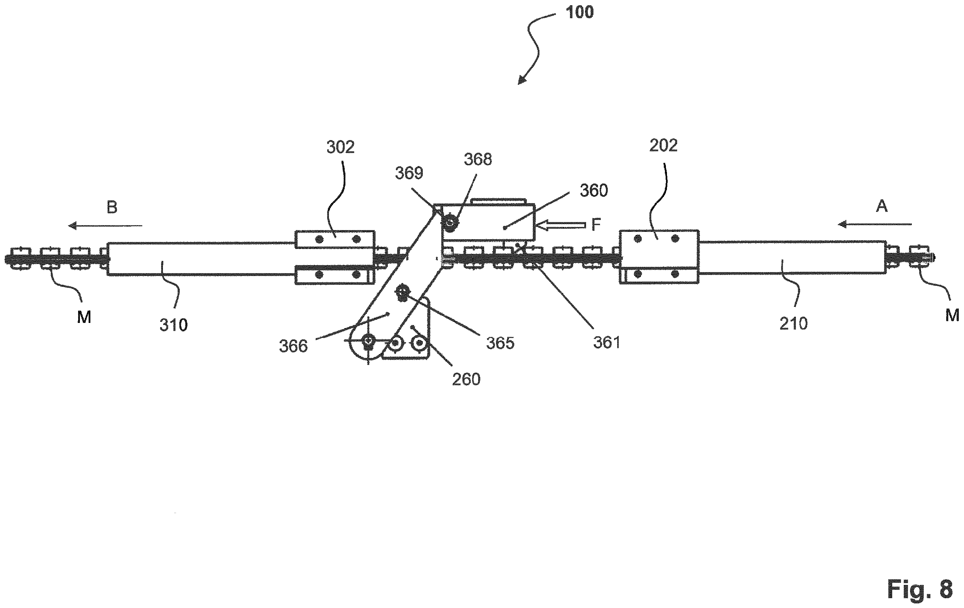

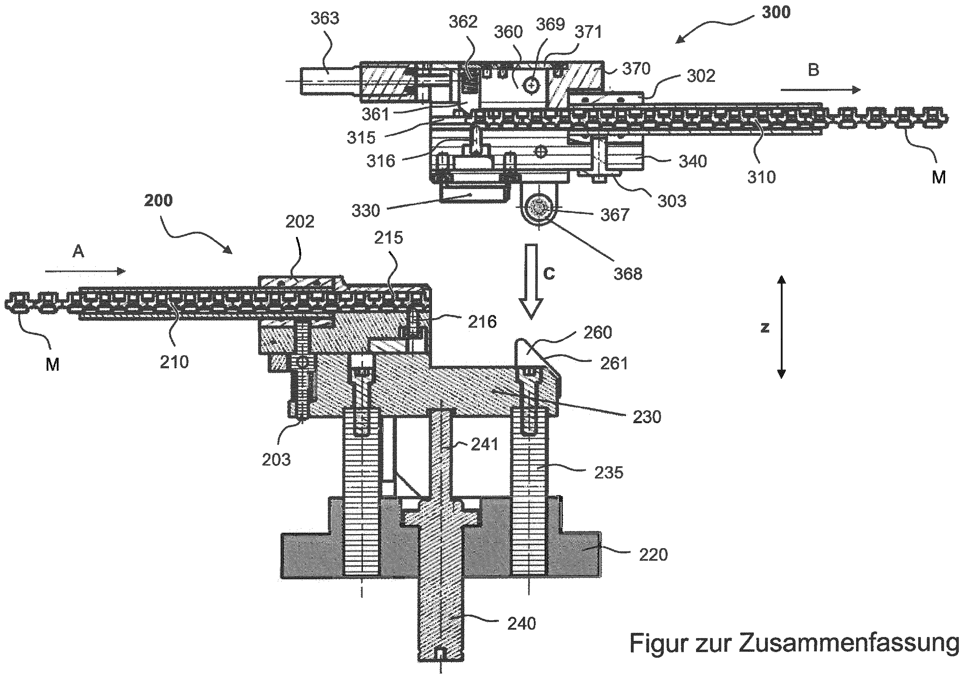

Das Zurückbewegen bzw. Zurückschieben des Klinkenschiebers 360 beginnt in dem gezeigten Ausführungsbeispiel bevor die Kupplungsplatte 330 an der oberen Kupplungseinrichtung 300 auf den Kupplungsschlitten 230 an der untern Kupplungseinrichtung 200 aufsetzt. Das Zurückbewegen des Klinkenschiebers 360 ist spätestens dann abgeschlossen, wenn sich die obere Kupplungseinrichtung 300 im unteren Totpunkt befindet, wie in Fig. 2 und Fig. 4 gezeigt. Auch Fig. 8 zeigt den Zustand im unteren Totpunkt, wobei die von der Gasdruckfeder 363 erzeugte Druckkraft in Fig. 8 mit einem Pfeil F veranschaulicht ist.

Der Klinkenhaken 361 ist in vertikaler Richtung federnd mit dem Klinkenschieber 360 verbunden und wird durch eine Feder 362 nach unten vorgespannt. Zum Zeitpunkt der Übergabe einer Mutter M kann die zu übergebende Mutter M' bzw. M* den Klinkenhaken 361 entgegen der wirksamen Federkraft nach oben wegdrücken, wozu der Klinkenhaken 361 an seinem unteren Ende mit einer Gleitschräge ausgebildet ist. Sobald die zu übergebende Mutter M' bzw. M* den Klinkenhaken 361 passiert hat, federt dieser nach unten zurück und hintergreift die übernommene Mutter M*, die auf diese Weise auch im Übernahmekanal 315 festgehalten wird.

Solange sich die Übergabevorrichtung 100 im unteren Totpunkt befindet, kann die Gasdruckfeder 363 keine wirksame Druckkraft auf den Klinkenschieber 360 bzw. den Klinkenhaken 361 ausüben. Erst bei der Aufwärtsbewegung der oberen Kupplungseinrichtung 300 kann die Gasdruckfeder 363 sukzessive ihre Druckkraft aufbauen, die jedoch zunächst noch wirkungslos ist, bis der zweite Sperrschieber 350 aus seiner Sperrposition in die Freigabeposition verschoben wurde.

Die erfindungsgemäße Übergabevorrichtung 100 zeichnet sich durch einen kompakten Aufbau aus. Ferner ist der Übergabemechanismus weitgehend gekapselt und somit gegen Verschmutzungen und äußere Störeinflüsse geschützt. Die erfindungsgemäße Übergabevorrichtung 100 kann auch für eine andere als die vorausgehend erläuterte Bewegungsabfolge konzipiert sein, bspw. derart, dass die unter Kupplungseinrichtung 200 nach oben bewegt wird oder dass beide Kupplungseinrichtungen 200 und 300 gleichzeitig bewegt werden usw.

### Bezugszeichenliste

- 100: Übergabevorrichtung
- 200: untere Kupplungseinrichtung
- 202: Schnellkupplung
- 203: Feststellmechanismus mit Handhebel
- 210: Zuführung
- 215: Übergabekanal
- 216: Federstift
- 220: Grundblock
- 230: Kupplungsschlitten
- 235: Linearführung
- 240: Gasdruckfeder
- 241: Stange
- 250: erster Sperrschieber
- 251: Greifausschnitt
- 252: Umlenkschieber
- 253: Steuerrolle
- 255: Steuerplatte
- 256: Führungsnut
- 260: Führungsplatte
- 261: Gleitfläche
- 300: obere Kupplungseinrichtung
- 302: Verbindungskupplung
- 303: Feststellmechanismus
- 310: Abführung
- 315: Übernahmekanal
- 316: Federstift
- 330: Kupplungsplatte
- 340: Grundplatte
- 350: zweiter Sperrschieber
- 351: Greifausschnitt
- 352: Umlenkschieber
- 353: Steuerrolle
- 355: Steuerplatte
- 356: Führungsnut
- 357: Einführschräge
- 360: Klinkenschieber
- 361: Klinkenhaken
- 362: Feder
- 363: Gasdruckfeder
- 365: Schwenkgelenk
- 366: Kipphebel
- 367: Querbolzen
- 368: Wälzlager
- 369: Zapfen
- 370: Gehäuseblock
- 371: Deckel
- 372: Langloch
- 373: Führungsnut

- A: Zuführrichtung
- B: Abführrichtung
- C: Schließbewegung, Schließrichtung
- F: Druckkraft
- M: Mutter (Einpresselement)
- T: Trennebene
- z: vertikale Richtung

## Patentansprüche

1. Übergabevorrichtung (100) für die schiebende Übergabe von Einpresselementen (M) an einem pressengebundenen Blechbearbeitungswerkzeug, mit einer an einem Werkzeugunterteil gehaltenen unteren Kupplungseinrichtung (200) und mit einer an einem Werkzeugoberteil gehaltenen oberen Kupplungseinrichtung (300) die beim pressentaktgebundenen Schließen des Blechbearbeitungswerkzeugs mit der unteren Kupplungseinrichtung (200) derart in Kontakt gebracht wird, dass ein in der oberen Kupplungseinrichtung (300) vorhandener Übernahmekanal (315) mit einem in der unteren Kupplungseinrichtung (200) vorhandenen Übergabekanal (215) in Überdeckung gelangt, wodurch die Übergabe wenigstens eines Einpresselements (M) ermöglicht wird,
wobei die untere Kupplungseinrichtung (200) eine erste betätigbare Durchlasssperre für den Übergabekanal (215) aufweist und die obere Kupplungseinrichtung (300) eine zweite betätigbare Durchlasssperre für den Übernahmekanal (315) aufweist,
wobei die erste Durchlasssperre an der unteren Kupplungseinrichtung (200) als erster Sperrschieber (250) ausgebildet ist, der quer zur Förderrichtung (A, B) der Einpresselemente (M) bewegbar ist, und
wobei die Übergabevorrichtung (100) über einen ersten Sperrschiebermechanismus verfügt, der den ersten Sperrschieber (250) beim In-Kontakt-Bringen der Kupplungseinrichtungen (200, 300) automatisch betätigt und diesen hierbei aus einer Sperrposition in eine Freigabeposition bewegt,
**dadurch gekennzeichnet, dass**
die zweite Durchlasssperre an der oberen Kupplungseinrichtung (300) als zweiter Sperrschieber (350) ausgebildet ist, der quer zur Förderrichtung (A, B) der Einpresselemente (M) bewegbar ist,
wobei die Übergabevorrichtung (100) auch über einen zweiten Sperrschiebermechanismus verfügt, der den zweiten Sperrschieber (350) beim In-Kontakt-Bringen der Kupplungseinrichtungen (200, 300) automatisch betätigt und diesen hierbei aus einer Freigabeposition in eine Sperrposition bewegt,
sodass die Sperrschieber (250, 350) während des Kontakts der Kupplungseinrichtungen (200, 300) automatisch wechselweise betätigt werden, um hierdurch die schleusenartige Übergabe einer definierten Anzahl von Einpresselementen (M) zu ermöglichen.

2. Übergabevorrichtung (100) nach Anspruch 1,
**dadurch gekennzeichnet, dass**
der erste Sperrschiebermechanismus und/oder der zweite Sperrschiebermechanismus eine Kulissenführung (253/256, 353/356) zur Erzeugung der Stellbewegungen am ersten Sperrschieber (250) und/oder am zweiten Sperrschieber (350) umfasst.

3. Übergabevorrichtung (100) nach einem der vorausgehenden Ansprüche,
**dadurch gekennzeichnet, dass**
die untere Kupplungseinrichtung (200) einen geführten Kupplungsschlitten (230) aufweist, der beim Schließen des Blechbearbeitungswerkzeugs von der oberen Kupplungseinrichtung (200) vertikal nach unten bewegt wird.

4. Übergabevorrichtung (100) nach Anspruch 3,
**dadurch gekennzeichnet, dass**
die untere Kupplungseinrichtung (200) wenigstens eine Federeinrichtung (240) zur automatischen Rückstellung des Kupplungsschlittens (230) aufweist.

5. Übergabevorrichtung (100) nach einem der vorausgehenden Ansprüche,
**dadurch gekennzeichnet, dass**
die obere Kupplungseinrichtung (300) einen federkraftbeaufschlagten Klinkenschieber (360) zum automatischen Weitertransport der übergebenen Einpresselemente (M*) aufweist.

6. Übergabevorrichtung (100) nach Anspruch 5,
**dadurch gekennzeichnet, dass**
diese über einen Stellmechanismus (365-369) für das automatische Zurückbewegen des Klinkenschiebers (360) verfügt.

7. Blechbearbeitungswerkzeug, mit einem Werkzeugunterteil und mit einem Werkzeugoberteil, wobei im Werkzeugoberteil wenigstens ein Einpressstößel zum Einpressen von Einpresselementen (M) angeordnet ist,
**dadurch gekennzeichnet, dass**
dieses Blechbearbeitungswerkzeug wenigstens eine Übergabevorrichtung (100) gemäß einem der vorausgehenden Ansprüche aufweist, mit der die mit dem Einpressstößel einzupressenden Einpresselemente (M) vom Werkzeugunterteil an das Werkzeugoberteil übergeben werden können.

## Claims

1. Transfer apparatus (100) for the sliding transfer of press-in elements (M) on a press-bound sheet-metal processing tool, having a lower coupling device (200) which is held on a lower tool part and having an upper coupling device (300) which is held on an upper tool part and is brought into contact with the lower coupling device (200) during the press-cycle-bound closing of the sheet-metal processing tool such that a receiving channel (315) present in the upper coupling device (300) comes to overlap a transfer channel (215) present in the lower coupling device (200), thereby allowing the transfer of at least one press-in element (M), wherein the lower coupling device (200) has a first actuable passage barrier for the transfer channel (215) and the upper coupling device (300) has a second actuable passage barrier for the receiving channel (315),
wherein the first passage barrier is formed on the lower coupling device (200) as a first blocking slide (250) which is movable transversely to the conveying direction (A, B) of the press-in elements (M), and
wherein the transfer apparatus (100) has a first blocking-slide mechanism which automatically actuates the first blocking slide (250) when the coupling devices (200, 300) are brought into contact and in the process moves said first blocking slide (250) from a blocking position into a releasing position,
**characterized in that**
the second passage barrier is formed on the upper coupling device (300) as a second blocking slide (350) which is movable transversely to the conveying direction (A, B) of the press-in elements (M), wherein the transfer apparatus (100) also has a second blocking-slide mechanism which automatically actuates the second blocking slide (350) when the coupling devices (200, 300) are brought into contact and in the process moves said second blocking slide (350) from a releasing position into a blocking position,
such that the blocking slides (250, 350) are automatically actuated alternately during the contact of the coupling devices (200, 300), in order, as a result, to allow the lock-like transfer of a defined number of press-in elements (M).

2. Transfer apparatus (100) according to Claim 1,
**characterized in that**
the first blocking-slide mechanism and/or the second blocking-slide mechanism comprises a slotted guide (253/256, 353/356) for bringing about the actuating movements at the first blocking slide (250) and/or at the second blocking slide (350).

3. Transfer apparatus (100) according to either of the preceding claims,
**characterized in that**
the lower coupling device (200) has a guided coupling slide (230) which is moved vertically downwards when the sheet-metal processing tool is closed by the upper coupling device (200).

4. Transfer apparatus (100) according to Claim 3,
**characterized in that**
the lower coupling device (200) has at least one spring device (240) for automatically returning the coupling slide (230).

5. Transfer apparatus (100) according to one of the preceding claims,
**characterized in that**
the upper coupling device (300) has a catch slider (360), acted on by spring force, for the automatic onward transport of the transferred press-in elements (M*).

6. Transfer apparatus (100) according to Claim 5,
**characterized in that**
it has an actuating mechanism (365-369) for the automatic return movement of the catch slider (360).

7. Sheet-metal processing tool having a lower tool part and having an upper tool part, wherein at least one press-in plunger for pressing in press-in elements (M) is arranged in the upper tool part,
**characterized in that**
this sheet-metal processing tool has at least one transfer apparatus (100) according to one of the preceding claims, with which the press-in elements (M) to be pressed in using the press-in plunger can be transferred from the lower tool part to the upper tool part.

## Revendications

1. Dispositif de transfert (100) destiné au transfert par poussée d'éléments d'insertion (M) sur un outil de travail de tôle lié à une presse, ledit dispositif de transfert comprenant une unité d'accouplement inférieure (200) maintenue sur une partie inférieure de l'outil et une unité d'accouplement supérieure (300) maintenue sur une partie supérieure de l'outil et amenée en contact avec l'unité d'accouplement inférieure (200) lors de la fermeture de l'outil de travail de tôle, laquelle est liée au cycle de presse, de manière à ce qu'un canal de transfert (315), ménagé dans l'unité d'accouplement supérieure (300), vienne recouvrir un canal de transfert (215) ménagé dans l'unité d'accouplement inférieure (200), ce qui permet le transfert d'au moins un élément d'insertion (M), l'unité d'accouplement inférieure (200) comportant un premier élément de blocage de passage actionnable destiné au canal de transfert (215) et l'unité d'accouplement supérieure (300) comportant un deuxième élément de blocage de passage actionnable destiné au canal de transfert (315),
le premier élément de blocage de passage de l'unité d'accouplement inférieure (200) étant conçu comme un premier coulisseau de blocage (250) qui peut être déplacé transversalement à la direction de transport (A, B) des éléments d'insertion (M), et
le dispositif de transfert (100) comportant un premier mécanisme de coulisseau de blocage qui actionne automatiquement le premier coulisseau de blocage (250) lorsque les unités d'accouplement (200, 300) sont mises en contact et le déplace ainsi d'une position de blocage à une position de libération,
**caractérisé en ce que**
le deuxième élément de blocage de passage de l'unité d'accouplement supérieure (300) étant conçu comme un deuxième coulisseau de blocage (350) qui peut être déplacé transversalement à la direction de transport (A, B) des éléments d'insertion (M),
le dispositif de transfert (100) comprenant également un deuxième mécanisme de coulisseau de blocage qui actionne automatiquement le deuxième coulisseau de blocage (350) lorsque les unités d'accouplement (200, 300) sont mises en contact, et le déplaçant ainsi d'une position de libération à une position de blocage,
de sorte que les coulisseaux de blocage (250, 350) soient actionnés automatiquement en alternance lors du contact des unités d'accouplement (200, 300) afin de permettre ainsi le transfert à la manière d'un sas d'un nombre défini d'éléments d'insertion (M).

2. Dispositif de transfert (100) selon la revendication 1,
**caractérisé en ce que**
le premier mécanisme de coulisseau de blocage et/ou le deuxième mécanisme de coulisseau de blocage comprennent un guide de coulisse (253/256, 353/356) destiné à générer les mouvements de réglage au niveau du premier coulisseau de blocage (250) et/ou du deuxième coulisseau de blocage (350).

3. Dispositif de transfert (100) selon l'une des revendications précédentes,
**caractérisé en ce que**
l'unité d'accouplement inférieure (200) comporte un chariot d'accouplement guidé (230) qui est déplacé verticalement vers le bas par l'unité d'accouplement supérieure (200) lorsque l'outil de travail de tôle est fermé.

4. Dispositif de transfert (100) selon la revendication 3,
**caractérisé en ce que**
l'unité d'accouplement inférieure (200) comporte au moins une unité à ressort (240) destinée à ramener automatiquement le chariot d'accouplement (230).

5. Dispositif de transfert (100) selon l'une des revendications précédentes,
**caractérisé en ce que**
l'unité d'accouplement supérieure (300) comporte un coulisseau à cliquet (360) soumis à la force d'un ressort et destiné au transport automatique des éléments d'insertion transférés (M*).

6. Dispositif de transfert (100) selon la revendication 5,
**caractérisé en ce que**
celui-ci comporte un mécanisme de commande (365-369) destiné à reculer automatiquement le coulisseau à cliquet (360).

7. Outil de travail de tôle comprenant une partie d'outil inférieure et une partie d'outil supérieure, au moins un poussoir d'insertion destiné à insérer des éléments d'insertion (M) étant agencé dans la partie d'outil supérieure,
**caractérisé en ce que**
cet outil de travail de tôle comporte au moins un dispositif de transfert (100) selon l'une des revendications précédentes avec lequel les éléments d'insertion (M), destinés à être insérés au moyen du poussoir d'insertion, peuvent être transférés de la partie d'outil inférieure à la partie d'outil supérieure.
